Europäisches Patentamt

European Patent Office

Office européen des brevets

(11) Publication number : **0 376 627 B1**

# EUROPEAN PATENT SPECIFICATION

(45) Date of publication of patent specification :
**22.02.95 Bulletin 95/08**

(51) Int. Cl.[6] : **H02M 3/07**

(21) Application number : **89313428.8**

(22) Date of filing : **21.12.89**

(54) **Integrated high voltage generating system.**

(30) Priority : **26.12.88 JP 328257/88**

(43) Date of publication of application :
**04.07.90 Bulletin 90/27**

(45) Publication of the grant of the patent :
**22.02.95 Bulletin 95/08**

(84) Designated Contracting States :
**DE FR GB NL**

(56) References cited :
**EP-A- 0 092 809**
**US-A- 4 580 067**

(73) Proprietor : **MATSUSHITA ELECTRIC
INDUSTRIAL CO., LTD.
1006, Oaza Kadoma
Kadoma-shi, Osaka-fu, 571 (JP)**

(72) Inventor : **Misaki, Horozumi
P-103, Aobaoka 8-ban
Suita-shi Osaka (JP)**
Inventor : **Okada, Yasuyuki
2-21-8, Syoukouryou
Ankouji-cho
Takatsuki-shi Osaka (JP)**

(74) Representative : **Crawford, Andrew Birkby et al
A.A. THORNTON & CO.
Northumberland House
303-306 High Holborn
London WC1V 7LE (GB)**

EP 0 376 627 B1

## Description

The present invention relates to an integrated high voltage generating system used in high voltage pulse generating circuit of semiconductor memory device or the like.

In an EEPROM or the like using MNOS transistors, in order to write and erase data in and from MNOS transistors, it is necessary to apply a high voltage of about 15 V to the gate electrode. Usually, semiconductor device such as EEPROM, a power supply of about 5 V is used as an operating power source. Accordingly, a high voltage pulse generating circuit is incorporated into an integrated circuit of EEPROM, and the input supply voltage of about 5 V is boosted by this high voltage pulse generating circuit to a high voltage of 15 to 20 V.

Such high voltage pulse generating circuit is composed of, as disclosed in the Japanese Patent Application No. 62-122931 or the United States Patent No. 4,839,787, a boosting charge pump connecting multiple stages of pump made of a diode element and a capacitor, high voltage generating system for applying the high voltage supplied from the charge pump into the gate electrodes of MNOS transistors of EEPROM, and others.

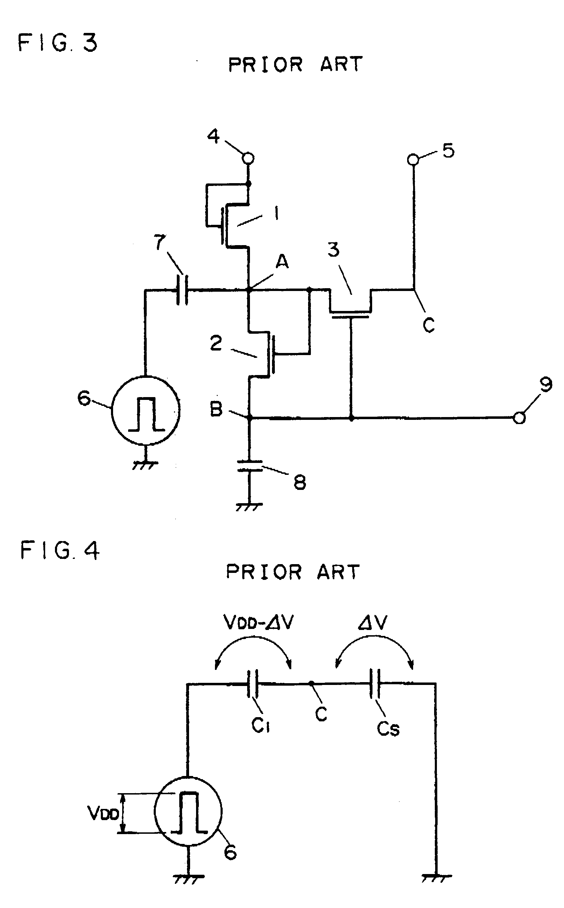

Fig. 3 shows a one-stage portion (unit circuit) of a conventional integrated high voltage generating system used in application of high voltage to gate electrodes of MNOS transistors of EEPROM.

In Fig. 3, a first supply voltage of about 5 V, for example, is applied to a first power source input terminal 4. At a second power source input terminal 5, a second supply voltage Vp of about 15 V, which is boosted, for example, by a charge pump as disclosed in the Japanese Patent Application No. 62-122931 or the United States Patent No. 4,839,787, is applied. The first supply voltage is fed to a node A through a diode-connected first MOS transistor (hereinafter called first transistor) 1. The second supply voltage Vp is fed to the node A which is the input node of the first supply voltage through a node C and a third MOS transistor (hereinafter called third transistor) 3. On the other hand, at the node A, clock pulses having a high frequency of several MHz and an amplitude VDD nearly equal to the first supply voltage (5 V in this case) are supplied from a clock pulse source 6 by way of a first capacitor 7 as a coupling capacity. The voltage of the node A supplied to a node B which is the output node through a diode-connected second MOS transistor (hereinafter called second transistor). Between the node B and the reference potential point, a second capacitor 8 is connected as a load capacity, and the voltage at the upper end of the second capacitor 8 is delivered from an output terminal 9 as an output voltage after boosting. Meanwhile, the gate electrode of the third transistor 3 is connected to the node B.

The operation of the integrated high voltage generating system in Fig. 3 is explained below.

The basic operating principle of the MOS transistor is known as follows. Supposing the voltages of the gate, drain and source electrodes of a MOS transistor to be VG, VD and VS, respectively, when $VD \geqq VG$, it follows that

$$VS = VG - (VT + \Delta VT) \quad (1)$$

where VT is the threshold voltage of the MOS transistor, and $\Delta VT$ is the back bias effect.

In the following explanation, the sum of $VT + \Delta VT$ is assumed to be 2 V.

The first supply voltage (5 V) applied to the first power source terminal 4 is supplied to the node A through the first transistor 1, and hence the potential VA at the node A is obtained as follows from equation (1):

$$VA = VG - (VT + \Delta VT)$$
$$= 5 V - 2 V$$
$$= 3 V \quad (2)$$

However, since clock pulses of amplitude VDD (5 V) are applied to the node A from the clock pulse source 6, the potential VA at the node A is raised to about 8 V at the moment the clock pulses rise up. This 8 V potential VA is supplied to the node B through the second transistor 2, and hence the potential VB at the node B is obtained as follows from equation (1):

$$VB = VG - (VT + \Delta VT)$$
$$= 8 V - 2 V$$
$$= 6 V \quad (3)$$

At the rise moment of a clock pulse, the third transistor 3 is turned off, but, as mentioned above, along with the rise of a clock pulse, the second transistor 2 is turned on, and along with the fall of a clock pulse, the second transistor 2 is turned off. At this time, the potential VB at the node B is raised to about 6 V by the electric charge accumulated in the second capacitor 8, and therefore the third transistor 3 is turned on. As a result, the second supply voltage Vp (15 V) applied to the second power source input terminal 5 is supplied to the node A through the third transistor 3. At this time, from equation (1), the potential VA at the node A becomes as follows:

$$VA = VG - (VT + \Delta VT)$$
$$= 6 V - 2 V$$
$$= 4 V \quad (4)$$

As clear from the comparison between equation (1) and equation (4), the potential VA at the node A was 3 V before the rise of a clock pulse, and it is boosted to 4 V when the clock pulse once rises and then falls. In this period, the potential VB at the node B is boosted to 6 V, and this voltage is delivered from the output terminal 9 as the output voltage.

Thus, in the integrated high voltage generating system in Fig. 3, the second and third transistors 2, 3 are alternately switched repeatedly in synchronism with the clock pulses, and the potential VA at the node A is boosted stepwise sequentially, and in response the potential VB at the node B is also boosted stepwise sequentially. As a result, a stepwise boosted output voltage is obtained from the output terminal 9. The output voltage from the output terminal 9 is finally boosted to the same potential as the second supply voltage (15 V), and this voltage is applied to the gate electrodes of the MNOS transistors composing the EEPROM (not shown).

As evident from the description herein, in Fig. 3, a charge pump is composed of the first, second and third transistors 1, 2 and 3, and the second capacitor 8, and the potential at the node B (output node) is boosted stepwise sequentially from the first supply voltage (5 V) to the second supply voltage Vp (15 V) in synchronism with the clock pulses applied through the first capacitor 7.

Incidentally, when a power source having a sufficiently large current sink capacity is connected to the second power source input terminal 5 in Fig. 3, the potential VC of the node C is almost fixed at the value of the second supply voltage Vp. However, when a charge pump as disclosed in the Japanese Patent Application No. 62-122931 or the United States Patent No. 4,839,787 is connected to the second power source input terminal 5, the following problem may occur.

The capacitors composing the stages of such charge pump have usually several 10 pF, and are capable of passing electric currents of only several microamperes and therefore the current sink capacity is small. Besides, when the number of bits of the EEPROM increases, the leak current also increases, which also causes to lower the current sink capacity of the charge pump. When a power source with such small current sink capacity is connected to the second power source input terminal 5 in Fig. 3, the potential VC of the node C is swept away by the clock pulses supplied through the first capacitor 7.

Meanwhile, supposing the pulse amplitude of the clock pulse source 6 to be VDD, the fluctuation amplitude of potential VC of node C to be $\Delta V$, the capacity of the first capacitor 7 to be C1, and the floating capacity of the node C to be Cs, the equivalent circuit in Fig. 3 becomes as shown in Fig. 4. In Fig. 4, assuming that the electric charge Q occurring in the first capacity is entirely transferred to the node C, it follows that

$$Q = C1 (VDD - \Delta V) = Cs \cdot \Delta V \quad (5)$$

From equation (5), we obtain

$$\frac{Cs}{C1} = \frac{VDD - \Delta V}{\Delta V}$$

$$= \frac{VDD}{\Delta V} - 1 \quad (6)$$

where

$$\frac{VDD}{\Delta V} \geqq 1$$

As stated above, in the integrated high voltage generating system shown in Fig. 3, the peak value of the amplitude of the potential Vc of the node C is held in the second capacitor 8 by the switching action of the second and third transistors 2, 3, and becomes the potential of the node B (output node). The potential at this node B is delivered from the output terminal 9 as the output voltage. In this process, the pulse amplitude waveform of the clock pulses is superposed on the potential VC of the node C, and a potential fluctuation of $\Delta V$ occurs. Accordingly, the output voltage taken out of the output terminal 9 must be, in principle, a constant voltage determined by the second supply voltage Vp, but the output voltage actually obtained is the voltage determined by (Vp + $\Delta V$), that is, $\Delta V$ higher than the second supply voltage Vp.

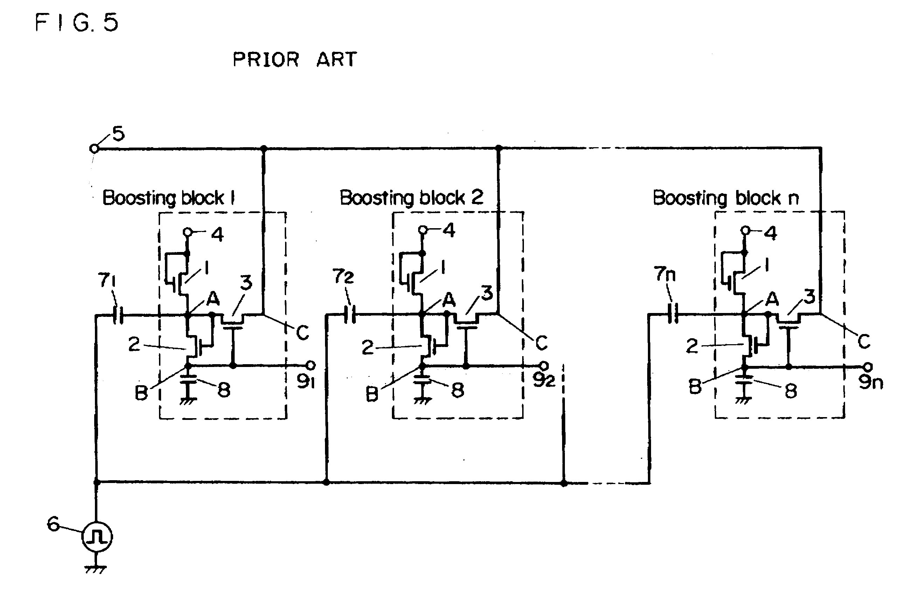

This problem further leads to the following problem when a plurality of integrated high voltage generating system shown in Fig. 3 are connected as shown in Fig. 5.

In Fig. 5, the boosting blocks 1 to n correspond to the integrated high voltage generating system shown in Fig. 3, individually. Supposing the fluctuation amplitude of the potential VC of the node C to be $\Delta Vn$ ($\Delta Vn$ denotes the fluctuation amplitude when n boosting blocks are connected), the capacity value of the first capacitors 71 to 7n to be C11, C12, ..., C1n, and the floating capacity of the node C to be Csn (Csn denotes the floating capacity when n stages are connected), it follows from equation (5) that

$$\sum_{M=1}^{n} C1M (VDD - \Delta Vn) = Csn \cdot \Delta Vn \quad \ldots \ldots \quad (7)$$

From equation (7), we obtain

$$\frac{Csn}{\displaystyle\sum_{M=1}^{n} C1M} = \frac{VDD}{\Delta Vn} - 1 \quad \ldots\ldots\ldots\ldots\ldots\ldots\ldots\ldots \quad (8)$$

From equation (8), it is known that when C1M increases, the value of the left side becomes small, and hence the value of the right side also becomes small. In other words, $\Delta Vn$ approaches VDD. That is, the fluctuation amplitude $\Delta Vn$ of the potential VC of the node C approaches the amplitude VDD of the clock pulses.

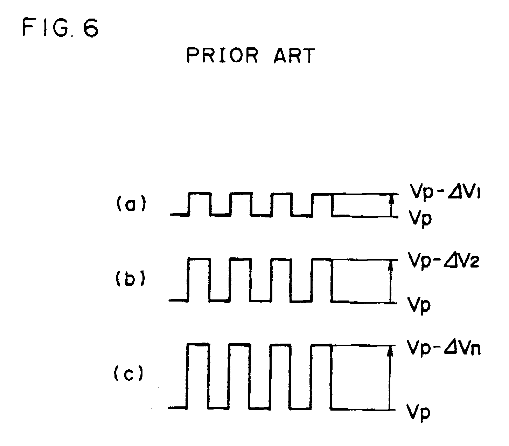

In this way, when a plurality of boosting blocks are connected as shown in Fig. 5, the number of first capacitors 71 to 7n connected to the common clock pulse source 6 increases, and therefore the fluctuation amplitude $\Delta Vn$ of the node C increases. As a result, the output voltage obtained from the output terminals 91 to 9n of the boosting blocks 1 to n changes to $Vp + \Delta Vn$. As stated above, since $\Delta Vn$ is the value determined by the number of stages of the boosting blocks, when there is one boosting block (that is, in the composition shown in Fig. 3), the output voltage taken out of the output terminal 9 is the voltage determined by $Vp + \Delta V1$ as shown in Fig. 6 (a), and when there are two boosting blocks, the output voltage of two boosting blocks is the voltage determined by $Vp + \Delta V2$ as shown in Fig. 6 (b), and when there are n boosting blocks, the output voltage of all boosting blocks is the voltage determined by $Vp + \Delta Vn$ as shown in Fig. 6 (c). Hence, as stated above, the maximum value of $\Delta Vn$ is a value close to the amplitude VDD of the clock pulses.

When using the integrated high voltage generating system as shown in Fig. 5 as the high voltage pulse generating circuit of EEPROM, it is necessary to assemble plural integrated high voltage generating systems in a different number of stages depending on the number of bits. However, since the output voltage of the plural integrated high voltage generating systems varies depending on the number of stages of the boosting blocks, the second supply voltage Vp supplied from the charge pump (not shown) cannot be correctly transmitted to the gate electrodes of the MNOS transistors (not shown).

US patent 4580067 describes a dynamic load circuit which selectively applies a high voltage state to a circuit node. A clock signal is coupled to a first node and the inverse of the clock signal is coupled to a second node. Isolation MOS transistors are controlled by the voltage level at the circuit node to isolate the clock signals from the first and second nodes when the circuit node is at a low voltage state. A high voltage signal $V_{pp}$ is coupled through a first MOS transistor to the first node. The voltage at the first node is coupled through a second MOS transistor to the circuit node. The circuit node is further coupled through further MOS transistors to the second node. The application of the alternating positive transitions of the clock and inverse clock signal cause the circuit to apply a progressively increasing voltage to the circuit node. The dynamic load circuit functions even if the threshold voltages of the high voltage transistors therein are almost as high as the supply voltage.

It is a first object of the invention to present an integrated high voltage generating system capable of eliminating the influences of voltage fluctuations due to clock pulses.

It is a second object of the invention to present an integrated high voltage generating system capable of preventing voltage fluctuations due to clock pulses from appearing on the output voltages of boosting blocks even when a plurality of boosting blocks are connected and clock pulses are applied to plural boosting blocks from a common clock pulse source through individual capacitors.

## SUMMARY OF THE INVENTION

The present invention provides an integrated high voltage generating system comprising:

a charge pump for boosting stepwise the potential of an output node sequentially from the value of a first supply voltage to the value of a second supply voltage in synchronism with clock pulses applied through a first capacitor; and

a diode-connected first MOS transistor, connected between a second supply voltage input terminal and an input node of said charge pump;

characterised by further comprising

a second MOS transistor, connected between said output node and an output terminal; and

means for connecting a gate electrode of said first MOS transistor and a gate electrode of said second MOS transistor whereby to supply said second supply voltage to the gate electrode of said second MOS transistor.

In this constitution, the gate potential of the second (output) MOS transistor is fixed at the second supply voltage. Accordingly, even if the current sink capacity of the second power source is small and, as a result, a current fluctuation due to clock pulses should occur in the output node of the charge pump, the output voltage taken out of the output terminal is free from the influence of the potential fluctuation by the clock pulses. Hence, when the integrated high voltage generating system of the invention is incorporated into a semiconductor device, an extremely stable operating voltage may be supplied to the internal circuit of the semiconductor device.

The features of the invention, as well as the effects and advantages thereof, will be better understood and appreciated from the following detailed description taken in conjunction with the drawings.

Fig. 1 is a circuit diagram of an integrated high voltage generating system in a first embodiment of the invention,

Fig. 2 is a circuit diagram of an integrated high voltage generating system in a second embodiment of the invention,

Fig. 3 is a circuit diagram of a conventional integrated high voltage generating system,

Fig. 4 is an equivalent circuit diagram of Fig. 3,

Fig. 5 is a circuit diagram showing other conventional integrated high voltage generating system, and

Fig. 6 is a voltage waveform diagram for explaining the operation of Fig. 5.

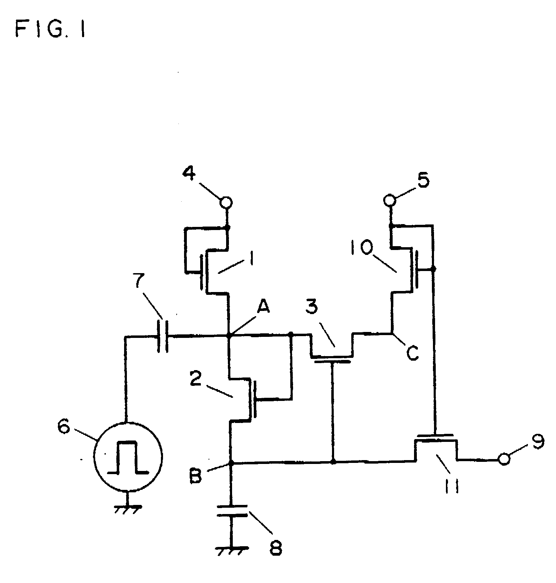

Referring now to Fig. 1, a first embodiment of the invention is described in detail below.

Fig. 1 shows a one-stage portion (unit circuit) of an integrated high voltage generating system.

In Fig. 1, a first supply voltage of about 5 V is applied to a first power source input terminal 4. At a second power source input terminal 5, a second supply voltage Vp of about 15 V boosted by a charge pump as disclosed in the Japanese Patent Application No. 62-122931 or the United States Patent No. 4,839,787 is applied. The first supply voltage is supplied to a node A which is an input node of the first supply voltage through a diode-connected first MOS transistor (hereinafter called first transistor) 1. The second supply voltage Vp is fed to a node A through a diode-connected fourth MOS transistor (hereinafter called fourth transistor) 10, a node C which is an input node of the second supply voltage, and a third MOS transistor (hereinafter called third transistor) 3. On the other hand, at the node A, clock pulse having an amplitude VDD (5 V in this case) nearly equal to the first supply voltage and having a high frequency of several MHz are supplied from a clock pulse source 6 through a first capacitor 7 as a coupling capacity. The voltage of the node A is supplied to a node B which is an output node of the charge pump through a diode-connected second MOS transistor (hereinafter called second transistor) 2. Between the node B and the reference potential point, a second capacitor 8 is connected as the load capacity, and the voltage across the second capacitor 8 is delivered from an output terminal 9 after boosting through a fifth MOS transistor (hereinafter called fifth transistor) 11 which is an output MOS transistor. Meanwhile, the gate electrode of the third transistor 3 is connected to the node B, and the gate electrode of the fifth transistor 11 is connected to the gate electrode of the fourth transistor 10.

As clear from comparison between Fig. 1 and Fig. 3, the embodiment in Fig. 1 is composed by adding the fourth and fifth transistors 10, 11 to the conventional integrated high voltage generating system shown in Fig. 3.

The operation of the embodiment in Fig. 1 is explained below.

The first supply voltage is supplied to the node A through the first transistor 1, and hence the voltage VA of the node A is same as in equation (2), that is,

$$VA = VG - (VT + \Delta VT)$$
$$= 5\,V - 2\,V$$
$$= 3\,V \quad (9)$$

At the node A, on the other hand, a clock pulse with amplitude VDD (5 V) is applied from the clock pulse source 6, and therefore the potential VA of the node A is raised to about 8 V at the moment a clock pulse rises up. This 8 V potential VA is supplied to the node B through the second transistor 2, so that the potential VB of the node B is same as in equation (3), that is,

$$VB = VG - (VT + \Delta VT)$$
$$= 8\,V - 2\,V$$
$$= 6\,V \quad (10)$$

On the moment of rise of a clock pulse, the third transistor 3 is turned off, but along with the rise of a clock pulse as stated above, the second transistor 2 is turned on, and consequently as the clock pulse falls, the second transistor 2 is turned on, and thereby the potential VB of the node B is raised to about 6 V by the electric charge accumulated in the second capacitor 8, so that the third transistor 3 is turned on. As a result, the second supply voltage Vp (15 V) applied to the second power source input terminal 5 is supplied to the node A through the fourth transistor 10 and the third transistor 3. At this time, the potential VC of the node C is expressed as follows:

$$VC = VG - (VT + \Delta VT)$$
$$= 15\,V - 2\,V$$

$$= 13 \text{ V} \quad (11)$$

and the potential VA of the node A becomes as follows:

$$VA = VG - (VT + \Delta VT)$$
$$= 6 \text{ V} - 2 \text{ V}$$
$$= 4 \text{ V} \quad (12)$$

As evident by comparing equation (9) and equation (12), the potential VA of the node A was 3 V before the rise of the clock pulse, it is boosted to 4 V when the clock pulse once rises and then falls. In this period, the potential VB of the node B is raised to 6 V, and this voltage is taken out from the output terminal 9 as the output voltage.

Thus, in the embodiment in Fig. 1, too, as the second and third transistors 2, 3 alternately repeat switching actions in synchronism with the clock pulses, the potential VA of the node A is sequentially boosted stepwise, and accordingly the potential VB of the node B is also sequentially boosted stepwise. As a result, a stepwise boosted output voltage is delivered from the output terminal 9. The output voltage from the output terminal 9 is finally boosted nearly to the same potential as the second supply voltage Vp (15 V), and this voltage is applied to the gate electrodes of MNOS transistors composing the EEPROM (not shown).

Meanwhile, also in the embodiment in Fig. 1, when a power source of a small current sink capacity is connected to the second power source input terminal 5, the potential VC of the node C varies depending on the clock pulse supplied through the first capacitor 7. However, when the fourth and fifth transistors 10, 11 are added as in the embodiment in Fig. 1, influences by this variation may be eliminated.

The reason is explained below.

In synchronism with the clock pulses, the second and third transistors 2, 3 alternately repeat switching actions to gradually boost the first supply voltage from the first power source input terminal 4. Suppose the potential VB of the node B becomes nearly equal to the second supply voltage Vp. At this time, assuming the fluctuation amplitude of the potential VC of the node C due to clock pulse to be $\Delta V$, the potential VC of the node C is as follows:

$$VC = VG - (VT + \Delta VT) + \Delta V$$
$$= VP - (VT + \Delta VT) + \Delta V \quad (13)$$

Thereafter, in the same operation as stated above, the potential VB of the node B becomes

$$VB = VP + \Delta V \quad (14)$$

and the influence of the fluctuation amplitude $\Delta V$ appears on the drain electrode (input side) of the fifth transistor 11.

However, at the gate electrode of the fifth transistor 11, the second supply voltage Vp fed from the second power source input terminal 5 is directly applied. Still more, from equation (14), the potential VD of the drain electrode is Vp + $\Delta V$. Therefore, the fifth transistor always satisfies the condition of

$$VD \geqq VG.$$

As a result, in the fifth transistor 11, equation (1) is always established, and hence

$$VS = VG - (VT + \Delta VT)$$
$$= Vp - (VT + \Delta VT) \quad (15)$$

As obvious from equation (15), the output voltage taken out of the output terminal 9 is determined by only Vp, VT, and $\Delta VT$, and it is free from the influence of amplitude fluctuation $\Delta V$.

Thus, according to the first embodiment, a stable output voltage may be always obtained without being affected by the amplitude fluctuation $\Delta V$ due to clock pulses.

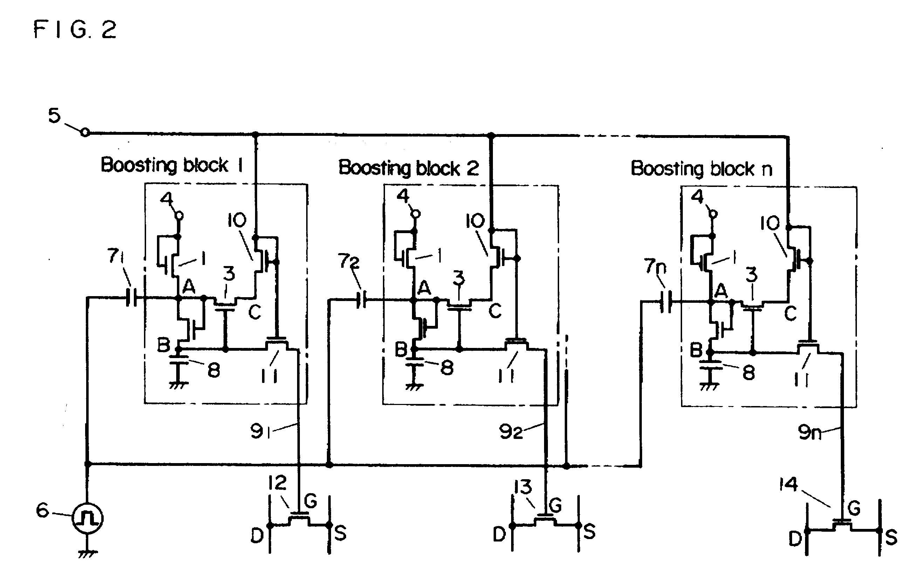

Fig. 2 shows an integrated high voltage generating system connecting n stages of the integrated high voltage generating system shown in Fig. 1 as a boosting block. In Fig. 2, the boosting blocks 1 to n correspond to the integrated high voltage generating system in Fig. 1 individually. The output lines 91 to 9n of the boosting blocks 1 to n are connected to the gate electrodes of the MNOS transistors 12 to 14 composing the EEPROM.

Even if the clock pulses are supplied to the boosting blocks 1 to n, by connecting plural boosting blocks 1 to n in cascade, from the common clock pulse source 6 through the first capacitors 71 to 7n, respectively, as evident from the operating principle in Fig. 1, the output voltages of the output lines 91 to 9n of the boosting blocks 1 to n are always fixed at

$$Vp - (VT + \Delta VT)$$

which is determined by the second supply voltage Vp, the threshold voltage VT of the fifth transistor 11, and the back bias effect $\Delta VT$, and hence the effect of fluctuations due to clock pulses does not appear. Therefore, even if plural integrated high voltage generating systems differing in the number of stages are incorporated in a semiconductor device depending on the number of bits, the problem of fluctuation of the output voltage depending on the number of boosting blocks does not occur in the integrated high voltage generating system.

## Claims

1. An integrated high voltage generating system comprising:

a charge pump for boosting stepwise the potential of an output node (B) sequentially from the value of a first supply voltage to the value of a second supply voltage in synchronism with clock pulses applied through a first capacitor (7); and

a diode-connected first MOS transistor (10), connected between a second supply voltage input terminal (5) and an input node (C) of said charge pump;

characterised by further comprising

a second MOS transistor (11), connected between said output node (B) and an output terminal (9); and

means for connecting a gate electrode of said first MOS transistor (10) and a gate electrode of said second MOS transistor (11) whereby to supply said second supply voltage to the gate electrode of said second MOS transistor (11).

2. An integrated high voltage generating system according to claim 1, comprising a clock pulse source (6), wherein the charge pump comprises:

a diode-connected third MOS transistor (1), connected between a first supply voltage input terminal (4) and a first node (A),

a diode-connected fourth MOS transistor (2), connected between said first node (A) and the output node (B),

a second capacitor (8), connected between said output node (B) and a reference potential point; and

a fifth MOS transistor (3), connected between said first node (A) and said input node (C); and

wherein the first capacitor (7) is connected between the clock pulse source (6) and said first node (A).

3. An integrated high voltage generating system according to claim 1 or 2, wherein there are provided:

a plurality of first capacitors (7n), connected to said clock pulse source (6);

a plurality of charge pumps each for boosting stepwise the potential of an output node (B) sequentially from the value of said first supply voltage to the value of said second supply voltage in synchronism with clock pulses supplied from said clock pulse source (6) through a respective first capacitor (7n);

a respective second MOS transistor (11), connected between said output node (B) and an output terminal (9n) in each charge pump;

a respective diode-connected first MOS transistor (10), connected between a second voltage input terminal (5) and an input node (C) of each charge pump; and

respective means for connecting a gate electrode of said diode-connected first MOS transistor (10) and a gate electrode of said second MOS transistor (11) of each charge pump.

## Patentansprüche

1. Integriertes Hochspannungs-Erzeugungssystem, das umfaßt:

eine Ladungspumpe, die in Synchronismus mit über einen ersten Kondensator (7) angelegten Taktimpulsen das Potential eines Ausgangsknotens (B) schrittweise sequentiell vom Wert einer ersten Versorgungsspannung auf den Wert einer zweiten Versorgungsspannung erhöht, und

einen als Diode geschalteten ersten MOS-Transistor (10), der zwischen einen zweiten Versorgungsspannungs-Eingangsanschluß (5) und einen Eingangsknoten (C) der Ladungspumpe geschaltet ist;

gekennzeichnet durch weiter umfassend

einen zweiten MOS-Transistor (11), der zwischen den Ausgangsknoten (B) und einen Ausgangsanschluß (9) geschaltet ist, und

eine Einrichtung zum Verbinden einer Gate-Elektrode des ersten MOS-Transistors (10) und einer Gate-Elektrode des zweiten MOS-Transistors (11), um dadurch die Gate-Elektrode des zweiten MOS-Transistors (11) mit der zweiten Versorgungsspannung zu versorgen.

2. Integriertes Hochspannungs-Erzeugungssystem nach Anspruch 1, das eine Taktimpulsquelle (6) umfaßt, worin die Ladungspumpe umfaßt:

einen als Diode geschalteten dritten MOS-Transistor (1), der zwischen einen ersten Versorgungsspannungs-Eingangsanschluß (4) und einen ersten Knoten (A) geschaltet ist,

einen als Diode geschalteten vierten MOS-Transistor (2), der zwischen den ersten Knoten (A) und den Ausgangsknoten B geschaltet ist,

einen zweiten Kondensator (8), der zwischen den Ausgangsknoten (B) und einen Bezugspotentialpunkt geschaltet ist, und

einen fünften MOS-Transistor (3), der zwischen den ersten Knoten (A) und den Eingangsknoten (C) geschaltet ist, und

worin der erste Kondensator (7) zwischen die Taktimpulsquelle (6) und den ersten Knoten (A) geschaltet ist.

3. Integriertes Hochspannungs-Erzeugungssystem nach Anspruch 1 oder 2, worin bereitgestellt werden:

eine Mehrzahl erster Kondensatoren (7n), die mit der Taktimpulsquelle (6) verbunden sind,

eine Mehrzahl von Ladungspumpen, die jeweils in Synchronismus mit Taktimpulsen, die über einen jeweiligen ersten Kondensator (7n) von der Taktimpulsquelle (6) geliefert werden, das Potential eines Ausgangsknotens (B) vom Wert der ersten Versorgungsspannung schrittweise sequentiell auf den Wert der zweiten Versorgungsspannung anheben,

einen jeweiligen zweiten MOS-Transistor (11), der zwischen den Ausgangsknoten (B) und einen Ausgangsanschluß (9n) in jeder Ladungspumpe geschaltet ist,

einen jeweiligen als Diode geschalteten ersten MOS-Transistor (10), der zwischen einen zweiten Spannungseingangsanschluß (5) und einen Eingangsknoten (C) jeder Ladungspumpe geschaltet ist, und

eine jeweilige Einrichtung, um eine Gate-Elektrode des als Diode geschalteten ersten MOS-Transistors (10) und eine Gate-Elektrode des zweiten MOS-Transistors (11) jeder Ladungspumpe zu verbinden.

## Revendications

1. Dispositif générateur de haute tension intégrée comprenant :

une pompe à charge pour amplifier par paliers le potentiel d'un noeud de sortie (B) séquentiellement à partir de la valeur d'une première tension d'alimentation jusqu'à la valeur d'une seconde tension d'alimentation en synchronisme avec des impulsions d'horloge appliquées via un premier condensateur (7) ; et

un premier transistor MOS monté en diode (10), relié entre une seconde borne de tension d'alimentation (5) et un noeud d'entrée (C) de ladite pompe à charge ;

caractérisé en ce qu'il comprend en outre :

un second transistor MOS (11), relié entre ledit noeud de sortie (B) et une borne de sortie (9) ; et

un dispositif pour relier une électrode de grille dudit premier transistor MOS (10) et une électrode de grille dudit second transistor MOS (11) pour fournir ainsi ladite seconde tension d'alimentation à l'électrode de grille dudit second transistor MOS (11).

2. Dispositif générateur de haute tension intégrée selon la revendication 1, comprenant une source d'impulsion d'horloge (6), dans lequel la pompe à charge comprend :

un troisième transistor MOS monté en diode (1), relié entre une première borne d'entrée de tension d'alimentation (4) et un premier noeud (A),

un quatrième transistor MOS monté en diode (2), relié entre ledit premier noeud (A) et le noeud de sortie (B),

un second condensateur (8), relié entre ledit noeud de sortie (B) et un point de potentiel de référence ; et

un cinquième transistor MOS (3), relié entre ledit premier noeud (A) et ledit noeud d'entrée (C) ; et

dans lequel le premier condensateur (7) est relié entre la source d'impulsion d'horloge (6) et ledit premier noeud (A).

3. Dispositif générateur de haute tension intégrée selon la revendication 1 ou 2, dans lequel il est fourni :

une pluralité de premiers condensateurs (7n), reliés à ladite source d'impulsions d'horloge (6) ;

une pluralité de pompes à charge chacune pour amplifier par paliers le potentiel d'un noeud de sortie (B) séquentiellement à partir de la valeur de ladite première tension d'alimentation jusqu'à la valeur de ladite seconde tension d'alimentation en synchronisme avec des impulsions d'horloges fournies par ladite source d'impulsions d'horloge (6) via un premier condensateur respectif (7n) ;

un second transistor MOS respectif (11), relié entre ledit noeud de sortie (B) et une borne de sortie (9n) dans chaque pompe à charge ;

un premier transistor MOS monté en diode respectif (10), relié entre une seconde borne d'entrée de tension (5) et un noeud d'entrée (6) de chaque pompe à charge ; et

un dispositif respectif pour relier une électrode de grille dudit premier transistor MOS monté en diode (10) et une électrode de grille dudit second transistor MOS (11) de chaque pompe à charge.

FIG. 1

F I G. 2

FIG. 3

PRIOR ART

FIG. 4

PRIOR ART

PRIOR ART

F I G. 5

FIG. 6

PRIOR ART

(a) $Vp - \Delta V_1$ / $Vp$

(b) $Vp - \Delta V_2$ / $Vp$

(c) $Vp - \Delta V_n$ / $Vp$